# FASCICULE DE BREVET EUROPEEN

(11) **EP 0 786 123 B1**
(45) Date de publication et mention de la délivrance du brevet: **03.02.1999**
(21) Numéro de dépôt: 95934691.7
(22) Date de dépôt: 12.10.1995
(51) Int. Cl.: G07F 17/30, G11B 27/00

(54) **PROCEDE DE COMMUNICATION POUR SYSTEME DE REPRODUCTION AUDIOVISUELLE NUMERIQUE INTELLIGENT**
KOMMUNIKATIONSVERFAHREN FÜR NUMERISCHES, INTELLIGENTES, AUDIOVISUELLES REPRODUKTIONSSYSTEM
METHOD OF COMMUNICATION FOR AN INTELLIGENT DIGITAL AUDIOVISUAL PLAYBACK SYSTEM

(30) Priorité: 12.10.1994 WO PCT/FR94/01185; 11.07.1995 FR 9508392
(43) Date de publication de la demande: 30.07.1997
(73) Titulaire: TECHNICAL MAINTENANCE CORPORATION, Las Vegas, NV 89104 (US)
(72) Inventeur: NATHAN, Guy, F-91330 Yerres (FR); MASTRONARDI, Tony, Pierrefonds, Québec H8Y 3L2 (CA)
(74) Mandataire: Debay, Yves
(86) Numéro de dépôt international: FR9501334
(87) Numéro de publication internationale: WO9612257

(56) Documents cités:
- WO-A-93/18465
- DE-A- 3 820 835
- US-A- 5 166 886

## Description

La présente invention concerne un procédé de communication pour système de reproduction audiovisuelle déclenché par paiement de redevances.

De tels systèmes de reproduction audiovisuelle sont généralement rencontrés dans des cafés ou dans des pubs. Ce type de système est en fait constitué d'une machine de reproduction sonore appelée ordinairement juke-box associée à un moniteur assurant la visualisation d'images vidéo ou de clips vidéo. Pour cela, le juke-box est équipé d'un lecteur de disques compacts vidéo et d'une discothèque de disques compacts vidéo et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audiovisuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique, en conséquence, que le système soit de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais mais ne peuvent cependant pas pour autant être éliminés. Outre cet inconvénient, l'inconvénient suivant est présenté du fait que les sociétés gérant et distribuant ces systèmes mettent dans le circuit un nombre limité de disques identiques et imposent une certaine rotation chez leurs clients, ce qui implique parfois pour ces derniers une attente désagréable lorsqu'un disque n'est pas disponible.

Par ailleurs, il est connu par la demande de brevet PCT/WO 93 18465 des juke-boxes informatisés permettant de recevoir à travers un réseau de télécommunication et un modem connectant le juke-boxes au réseau, des informations numérisées constituant des chansons ou morceaux musicaux téléchargés dans une mémoire de masse du juke-boxes. Le système de communication sert également au téléchargement de fichiers représentatifs d'informations graphiques numérisées, les chansons et les fichiers graphiques étant compressés avant leur envoi sur le réseau. Le processeur du juke-boxes exploite ensuite ces fichiers en les décompressant et en envoyant les données graphiques au circuit vidéo et les données de la chanson au circuit audio.

Toutefois, le processeur gère également les interfaces homme machine et la gestion de ces différents éléments se fait séquentiellement en affichant les images graphiques représentatives de la chanson, ensuite en répondant à l'actionnement des touches par l'utilisateur puis en recherchant si l'utilisateur a payé les montants souhaités et enfin, lorsque le montant souhaité a été réglé, à déposer la sélection dans une file en vue de son exécution ultérieure. Par ailleurs ce système ne peut fonctionner qu'en affichant d'abord les images graphiques et en lançant ensuite l'exécution de la chanson car le processeur ne peut, d'après les logigrammes, exécuter deux taches en même temps. Enfin, les représentations graphiques sont uniquement des données digitalisées par une table scanner de la couverture de l'album de la chanson. En aucun cas un tel juke-box ne permet l'affichage d'images animées en même temps que le diffusion de chanson ou de musique. De même le processeur étant utilisé pour la décompression et le traitement des informations numériques en vue de la transformation en signaux audio, ne pourra prendre en compte de nouvelles actions d'un utilisateur qui rechercherait à effectuer une nouvelle sélection. Ceci apparaît clairement, notamment en page 12 de la demande PCT lignes 25 à 37. La sélection de nouvelles chansons ne peut se faire que dans le cas où le juke-boxes est en mode attractif, c'est-à-dire dans le mode où il affiche successivement des représentations graphiques des différentes chansons stockées dans le juke-boxes.

Il est également connu, par le brevet américain 4,956,768, un serveur large bande pour transmettre de la musique ou des images constituées par un processeur principal communiquant par un canal DMA avec un disque dur et des cartes de sortie contrôlées chacune par un processeur local supplémentaire qui gère un mode alternatif d'accès à deux mémoires tampon A et B et dont l'une, A, est utilisée pour délivrer par exemple des données musicales à un utilisateur tandis que l'autre est remplie. Chacune des cartes de sortie est reliée à une station de consultation qui peut être locale et située dans les mêmes locaux que le serveur ou à distance et reliée par un réseau de communication audio ou vidéo. Le serveur reçoit les données bloc par bloc et s'assure que les parités des échantillons sont correctes et refuse le bloc incluant plus de deux échantillons successifs faux. Chacun des blocs est naturellement désigné par un numéro. Une fois qu'un bloc a été accepté, il peut être stocké sur le disque dur local en enregistrant son numéro d'ordre qui n'a aucune relation avec son adresse physique sur le disque dur. Les stations de consultation ont des sorties audio et vidéo tels que des haut-parleurs ou des écouteurs et un moniteur télévision permettant l'écoute de la musique ou la visualisation d'images en réponse à des demandes reçues de terminaux inclus dans les stations de consultation. Dans un tel système, les stations de consultation où le premier processeur de communication doit avoir un logiciel spécifique de gestion des requêtes de sélection de morceaux musicaux ou vidéo. Ce n'est que lorsque la requête a été effectuée et adressée au processeur du serveur large bande que celui-ci peut transférer, sous l'autorité du processeur local, les données dans les mémoires tampon de façon à ce que ce processeur local assure le convoyage des données vers les stations de consultation. Il est, en outre, bien précisé que le remplissage des cartes de sortie et des mémoires tampon n'est effectué qu'après avoir reçu l'autorisation du processeur local de la carte.

Par conséquent, un tel système ne peut fonctionner que dans le cadre d'un dispositif multiprocesseur et ne suggère nullement l'utilisation d'un tel serveur pour un juke-box contrôlé par un seul processeur fonctionnant dans un environnement multitâche. Un tel système suggéré par le brevet américain met donc en oeuvre une installation complexe permettant de délivrer un service à plusieurs stations de consultation; cette installation complexe est donc onéreuse et incompatible avec un système à juke-boxes dont le prix de revient doit être le plus réduit possible.

De plus le processus de téléchargement par un site central des fichiers audio ou vidéo numérisés vers les serveurs locaux est effectué à travers une ligne spécialisée communiquant selon une seule direction avec les interfaces V35 du serveur local et permettant le passage de trames de 64 kilobits. Il est donc nécessaire d'établir une seconde communication en parallèle à travers le réseau téléphonique commuté au moyen d'une interface série pour permettre l'échange d'informations de service. Il est précisé qu'il sera préférable de transmettre les nouvelles pièces de musique au serveur large bande la nuit de façon à laisser le système libre pour les utilisateurs pendant la journée et la transmission peut se faire de façon continu et simultanée pour tous les serveurs locaux sous réserve qu'ils puissent enregistrer en continu c'est-à-dire de préférence la nuit.

Un tel dispositif ne peut fonctionner que dans la mesure où le serveur central est le maître et les serveurs locaux fonctionnent en esclaves. Ceci implique donc une disponibilité des serveurs locaux au moment de l'établissement de la communication ce qui est rendu possible par le fait que les serveurs locaux disposent d'un double processeur permettant de libérer le processeur de communication pendant des temps suffisant. Dans une architecture monoprocesseur il est donc délicat d'instaurer une communication selon ce protocole déterminé avec un nombre variable de stations juke-boxes pour permettre des opérations à distance telles que le téléchargement de musique ou de vidéo suite à une sélection effectuée par le gérant du juke-box ou l'envoi de statistiques au central, ou la récupération des informations concernant la facturation ou la gestion sécuritaire des unités, ou la récupération à l'analyse et la distribution d'enquête.

Il est également connu, par le brevet américain 5 166 886, un système permettant à un utilisateur, de se servir, directement sur son ordinateur, à des fins d'essai, d'un programme que l'utilisateur souhaite acquérir. Cette mise à disposition s'effectue par l'intermédiaire d'un serveur central envoyant, via un réseau câblé de télévision, des informations répétées en continu vers des unités de réception situées chez les utilisateurs. Les informations sont envoyées sous formes de blocs. Les unités de réception sont connectées à l'ordinateur de l'utilisateur. Ces unités effectuent le décryptage des informations envoyées sur le réseau par le serveur, pour les charger sur l'ordinateur de l'utilisateur. Ces informations sont constituées notamment, de programme d'ordinateur pour essai, d'informations pour présenter des images et des sons. L'utilisateur est ensuite libre de consulter, et dans certain cas d'essayer les programmes mis à sa disposition sur son ordinateur. L'ordinateur et le système d'exploitation associé de l'utilisateur sont de type conventionnel, ils fonctionnent de façon séquentielle. Le procédé de communication comprend uniquement l'envoi, par le serveur central, sur le réseau de communication, de blocs d'informations vers les unités de réception. Les erreurs de réception sont corrigées, soit dès la réception, par un procédé de correction de l'unité de réception, soit, lors de la réception suivante, par un nouveau chargement des blocs d'information défectueux. Le serveur central ne reçoit pas de communication de la part des unités de réception par le même réseau de communication. Les blocks d'informations transmis sur le réseau comprennent une en-tête contenant, notamment une identification des unités de réception auxquelles sont destinées les informations de chaque bloc. Ce système ne permet pas une communication des unités de réception vers le serveur. Lorsque l'utilisateur désire acquérir un programme d'ordinateur qu'il vient d'essayer, il doit utiliser au moins un autre moyen de communication pour effectuer et recevoir sa commande, ce qui complique le système. De plus, ce système utilise comme réseau de communication, le réseau de télévision par câble qui nécessite un encodage et un décodage des informations par des moyens onéreux. Enfin, ce système de communication ne suggère pas d'utiliser un tel serveur pour un juke-box.

La présente invention a pour but de remédier aux divers inconvénients présentés ci-dessus par les systèmes de l'art intérieur et propose un système de communication entre des unités de juke-boxes permettant la reproduction et la représentation d'information numérique audio visuelle et un serveur central assurant parmi différentes fonctions celle de téléchargement de ces informations.

Ce but est atteint par le fait que le procédé de communication fonctionne dans un mode conférence et comporte les étapes suivantes ;
- envoi d'un entête avant toute transaction qui inclut l'identité de la cible de destination, l'identité de l'émetteur, et la taille des paquets ;
- réponse du serveur envoyée sous forme de paquet de données chaque paquet envoyé par le serveur étant encrypté en utilisant le code d'identification du logiciel du juke-box ;
- réception d'un paquet de données par le juke-box qui décrypte le paquet, effectue en même temps un contrôle des données reçues par la méthode CRC et envoie un accusé de réception au serveur indiquant l'exactitude des informations reçues, pour lui permettre de préparer et envoyer un nouveau paquet à destination de l'unité.

Selon un autre mode de fonctionnement le serveur peut envoyer les informations par flot, le flot incluant plusieurs paquets et les unités réceptrices effectueront le décodage et le stockage ultérieurement et signaleront après la réception de l'indicateur du dernier paquet, les paquets défectueux reçus au serveur.

Selon une autre particularité chaque paquet comporte un premier champ permettant l'identification du vendeur, un deuxième champ permettant d'indiquer l'identification d'une application, ce champ de 32 bits permettra de préciser s'il s'agit d'une chanson digitale, d'une vidéo digitale , d'une image fixe, d'une mise à jour de logiciel, de statistique, d'une facturation, ou d'une mise à jour de la base de donnée de l'unité, un troisième champ indiquant l'identification d'un seul type d'application tel que le numéro d'identification du produit, le type de facturation, la différence entre une chanson midi ou une chanson numérique, l'indication qu'il s'agit du dernier bloc, enfin un quatrième champ indiquant le numéro séquentiel du bloc dans la transmission, un cinquième champ indiquant la longueur en octet de ce bloc, un sixième champ constitué par les données de longueur variable, un septième champ constitué par les données de vérification de la redondance cyclique.

La présente invention a pour but de remédier aux divers inconvénients présentés par les systèmes de l'art antérieur et propose un système de reproduction audiovisuelle numérique intelligent, pratique à mettre en oeuvre, peu encombrant, fiable, autorisant le stockage au niveau du titre ainsi que la suppression ou l'insertion aisée de titres respectivement non écoutés ou désirés et ceci tout en conservant des performances et une qualité de reproduction de haut niveau.

Un autre but de l'invention est de proposer un protocole standard qui permette en plus des possibilités déjà évoquées ultérieurement de faire une mise à jour à distance du logiciel.

Selon une autre particularité, ce but est atteint par le fait que les unités de juke-box comportent un logiciel d'interprétation du deuxième champ des paquets de communication qui détectent le code correspondant à une mise à jour à distance du logiciel et après avoir vérifié que le numéro de version du logiciel est plus grand que la version installée sur l'unité, déclenche une procédure de vérification du statut du système pour s'assurer qu'il n'y a pas d'activité en cours sur le juke-box. Dans l'affirmative l'unité provoque l'affichage d'un message d'attente, pendant la réception de la nouvelle version de logiciel sur l'écran effectue une copie de sauvegarde de la version de logiciel installé sur l'unité modifie le fichier de démarrage du système pour démarrer avec la version de sauvegarde puis lance l'exécution de la nouvelle version de logiciel, vérifie l'état du statut du système après l'exécution de cette nouvelle version, ré-initialise les fichiers de démarrage du système pour démarrer avec la nouvelle version, dans le cas où le statut n'est pas OK, ré-initialise le système avec l'ancienne version et signale une erreur de réception au serveur central.

Selon une autre particularité chaque système de reproduction audiovisuelle comporte un système d'exploitation multitâches gérant à l'aide d'un microprocesseur principal la tâche vidéo , la tâche son, la tâche télécommunication, la tâche des entrées (clavier; écran, tactile) et un tampon de statut est associé à chacune des tâches pour représenter l'activité ou la non activité de cette tâche

D'autres avantages et particularités de l'invention apparaîtront à la lecture de la description suivante, faite en référence aux dessins annexés, donnés à titre d'exemple illustratif mais non limitatif d'une réalisation de l'invention, dans lesquels:

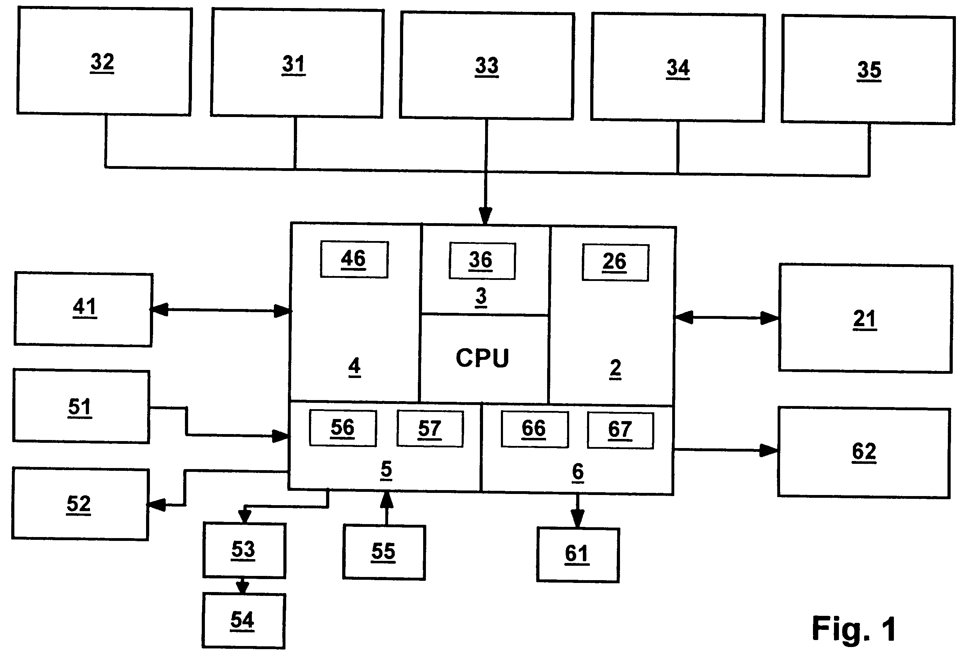

La figure 1 représente un schéma électrique du matériel constituant l'invention;

La figure 2 représente un organigramme faisant apparaître les modules de services spécifiques d'une tâche et géré au moyen du système d'exploitation multitâche, l'ensemble des modules étant inclus dans une librairie stockée dans les moyens de mémorisation.

La figure 3 représente l'organisation du système multitâches gérant l'ensemble des moyens matériels et logiciels;

La figure 4 représente un logigramme de description du fonctionnement du système de gestion multitâches;

La figure 5 représente le logigramme de vérification d'activité des tâches.

La figure 6 représente schématiquement la structure de la base de donnée ;

La figure 7 représente la structure des paquets utilisés dans le protocole de communication ;

La figure 8 représente une procédure de mise à jour du logiciel est réalisable grâce au protocole de l'invention

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'est porté sur un système du type Intel 80486 DX/2 qui possède des moyens de mémorisation et les caractéristiques suivantes:
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Tout autre unité centrale possédant des performances équivalentes ou supérieures pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat de 14 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,

Faisant partie également des moyens de mémorisation, des modules de stockage (21) utilisant des disques durs de type SCSI haute vitesse et haute capacité, sont associés aux moyens de mémorisation déjà présents dans le dispositif à microprocesseur. Ces modules servent au stockage d'informations audiovisuelles.

Un adaptateur de modem de télécommunications (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur - tuner (53) relié au circuit électronique (5) de type synthétiseur de musique prévues pour supporter un grand nombre de sources d'entrée tout en fournissant une sortie présentant une qualité de type CD (disque compact), telle que par exemple l'adaptateur audio multimédia à microprocesseur, du type carte "Sound Blaster" SBP32AWE de chez Creative Labs Inc sur lequel deux tampons mémoire (56, 57) sont ajoutés dans le but explicité ultérieurement.

De même le circuit de commande des moyens de visualisation comporte également deux mémoires tampon (66, 67) dans le but explicité ultérieurement.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet d'afficher sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

le circuit d'entrée (3) interface également avec le système un ensemble télécommande (31) constitué, par exemple:
- d'une télécommande infrarouge de chez Mind Path Technologies Inc., émetteur qui possède 15 touches de commande pour le système à microprocesseur et 8 touches de commande pour dispositif de projection.
- d'un récepteur infrarouge avec adaptateur série de chez Mind Path Technologies Inc.

Un dispositif de paiement de redevances (35) de chez National Rejectors Inc., est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti en acier avec garnitures extérieures personnalisables.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité

Les données audiovisuelles numérisées et compressées sont stockées dans les moyens de mémorisation (21).

Chaque sélection est disponible selon deux formats numérisés: avec une qualité hi-fi ou une qualité CD.

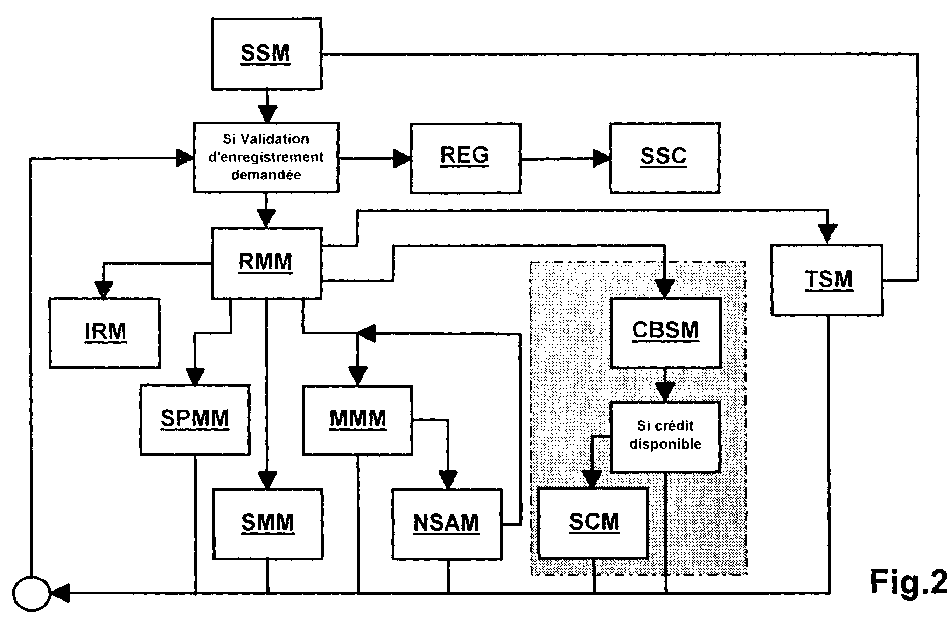

Préalablement à la description et à la lecture de cet organigramme de la figure 2, il est essentiel de noter que, bien que tous ces modules décrits séparément semblent être utilisés d'une manière séquentielle, en réalité, les tâches spécifiques de ces modules sont exécutées simultanément dans un environnement utilisant le système d'exploitation multitâche. Par conséquent, l'organigramme indique des opérations spécifiques qu'un module doit effectuer et non un branchement vers ce module qui invaliderait toutes les opérations effectuées par les autres modules.

Le premier module, référencé SSM, est le module de démarrage du système. Ce module ne fournit qu'un seul service, par conséquent il se charge automatiquement au moment de la mise sous tension du système. Si le système est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées telles que le nom de l'établissement, l'adresse et le numéro de téléphone.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple:
- des clients qui touchent l'écran: lorsqu'un client ou un utilisateur touche l'écran, le système transfère le contrôle de sa session de premier plan au module CBSM du mode de sélection et d'exploration client,
- des requêtes d'appel serveur du réseau de télécommunications: lorsque le système détecte une boucle sur la ligne téléphonique, il émet une procédure asynchrone d'arrière-plan: le mode de services télécom du module TSM,
- des requêtes concernant le commutateur de clé (32): lorsque le gérant tourne le commutateur de clé, le système donne le contrôle de sa session de premier plan au module SMM de mode de gestion,
- la réception d'un signal de télécommande: quand une commande est reçue, elle est traitée dans une session d'arrière-plan par le module SMM de commandes système alors que la session de premier plan reste disponible pour d'autres interventions,
- l'apparition d'une fin de temporisation montrant l'inactivité du système: lorsque l'un des différents temporisateurs est activé, le contrôle est temporairement donné au module IRM de routines d'inactivité pour traitement.

Le système reste dans le mode "en service" jusqu'à ce que l'un des événements décrits ci-avant se produise.

Le module IRM est le module de routines d'inactivité. Ce module contient des routines réalisant des fonctions prédéterminées telles que l'affichage de la couverture d'un album, l'émission de parties de morceaux musicaux présents dans le système, la reproduction de sélections complètes à des fins promotionnelles internes, des reproductions audio à des fins promotionnelles externes, des annonces promotionnelles parlées de nouvelles sélections musicales, le repli vers une source auxiliaire auxquelles il peut être fait appel lorsque le système est en inactivité et qu'une période de temps prédéfinie mais réglable, correspondant à une temporisation, s'est écoulée.

Le module SMM est le module de commandes système. Ce module permet de réaliser des fonctions qui commandent au système d'accepter une entrée demandée par un dispositif de télécommande infrarouge, ces fonctions étant instantanément traitées sans que le processus en train de se dérouler ne soit arrêté. Un très grand nombre de telles fonctions sont possibles, seules quelques unes sont, de manière non limitative, ci-dessous listées:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module MMM est le module de mode de gestion. Ce module est déclenché lorsque le commutateur de clé est tourné par le gérant. L'affichage de l'écran ordinaire est remplacé par un affichage spécifique à la gestion des systèmes. Avec ce nouvel affichage le gérant est capable de contrôler tous les réglages qui sont réalisables avec la télécommande. Il peut également prendre le contrôle de commandes de bas niveau additionnelles permettant par exemple de définir les commandes à valider ou à invalider sur la télécommande. Il est aussi capable de définir un maximum de hauts et bas niveaux pour chaque source de sortie du système, ces limites définissant la gamme disponible sur la télécommande. A partir de cet écran, le gérant est capable d'accéder au mode d'acquisitions de nouvelles sélections en touchant un bouton repéré sur l'écran tactile. Lorsque le gérant a achevé de définir ces commandes ainsi que la configuration du système, il suffit alors qu'il enlève la clé et le système retourne automatiquement au mode "en service".

Le module NSAM est le module de mode d'acquisitions de nouvelles sélections.

Le module CBSM est le module de mode de sélection et d'exploration client. L'accès à ce module est déclenché à partir du mode "en service" lorsque le client touche l'écran. L'affichage permet à l'usager de visualiser un menu prévu pour une exploration puissante assistée par des messages vocaux numérisés pour le guider dans son choix de sélections musicales.

Le module TSM est le module de mode de services de télécommunications entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner

Le module SPMM permet la gestion des sélections de musiques chansons ou vidéo mises en file d'attente par le système en vue de leur exécution dans l'ordre de sélection.

Enfin le module SMM permet la gestion du système par le gérant à l'aide de la télécommande.

Le système d'exploitation multitâches constitue l'élément essentiel pour permettre l'exécution simultanée de multiples fragments de codes et pour gérer les priorités entre les différentes tâches qui se réveillent

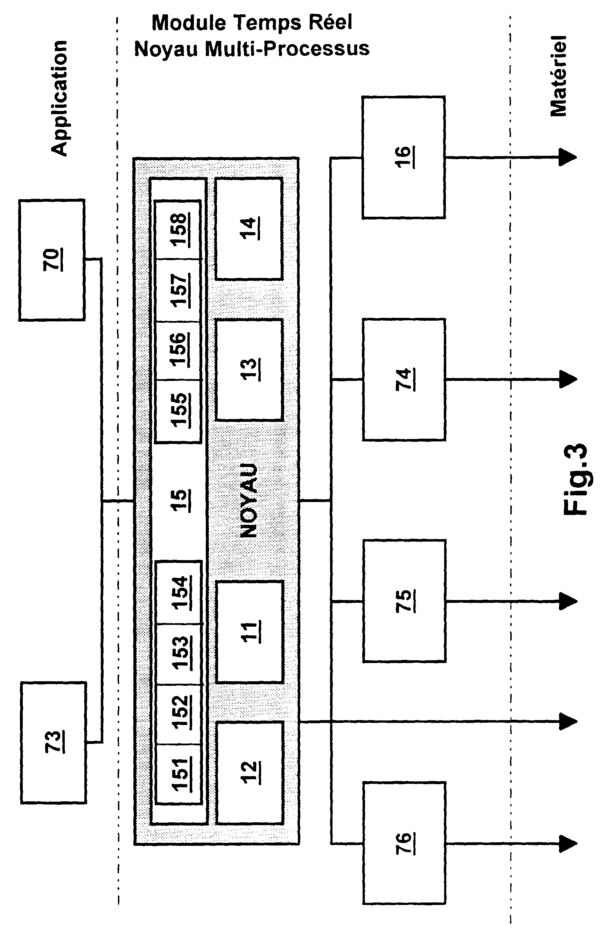

Ce système d'exploitation multitâche est organisé, comme représenté à la figure 3, autour d'un noyau comportant un module (11) de résolution des priorités entre tâches, d'un module (12) superviseur des tâches, d'un module (13) de sérialisation du matériel utilisé et un module (14) de communication des processus. Chacun des modules communique avec des interfaces (15) de programmation des applications et la base de donnée (16). Ilya autant d'interface de programmation qu'il y a d'applications. Ainsi le module (15) comporte une première interface (151) de programmation pour le commutateur à clé (32), une deuxième interface (152) de programmation pour la commande à distance (31), une troisième interface (153) de programmation pour l'écran tactile (33), une quatrième interface (154) de programmation pour le clavier (34) une cinquième interface (155) de programmation pour le dispositif de paiement (35), une sixième interface (156) de programmation pour le circuit de contrôle du son (5), une septième interface (157) de programmation pour le circuit (6) de contrôle de la vidéo et une dernière interface (158) pour le circuit (4) de contrôle des télécommunications.

Cinq tâches ayant un ordre de priorité décroissant sont gérées par le noyau (kernel) du système d'exploitation, la première (76) pour les entrées sorties vidéo a la priorité la plus élevée, la deuxième (75) concerne le son, la troisième (74) les télécommunications, la quatrième (73) les interfaces et la cinquième (70) la gestion. Ces ordres de priorités seront pris en compte par le module (11) de résolution des priorités au fur et à mesure de l'apparition ou de la disparition d'une tâche. Ainsi dès qu'une tâche vidéo apparaît, les autres tâches en cours exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse (21) alternativement vers l'un des deux tampons (66, 67) tandis que l'autre tampon (67, respectivement 66) est utilisé par le circuit (6) contrôleur de vidéo pour produire l'affichage après décompression des données. En entrée la tâche vidéo (76) a pour objet de transférer les données reçues dans le tampon de télécommunication (46) vers la mémoire de masse (21). Il en est de même pour la tâche son (75), d'une part en entrée entre le tampon de télécommunication (46) et le tampon (26) de la mémoire de masse (21)et d'autre part en sortie entre le tampon (26) de la mémoire de masse (21) et l'un des deux tampons (56, 57) du circuit (5) contrôleur de son.

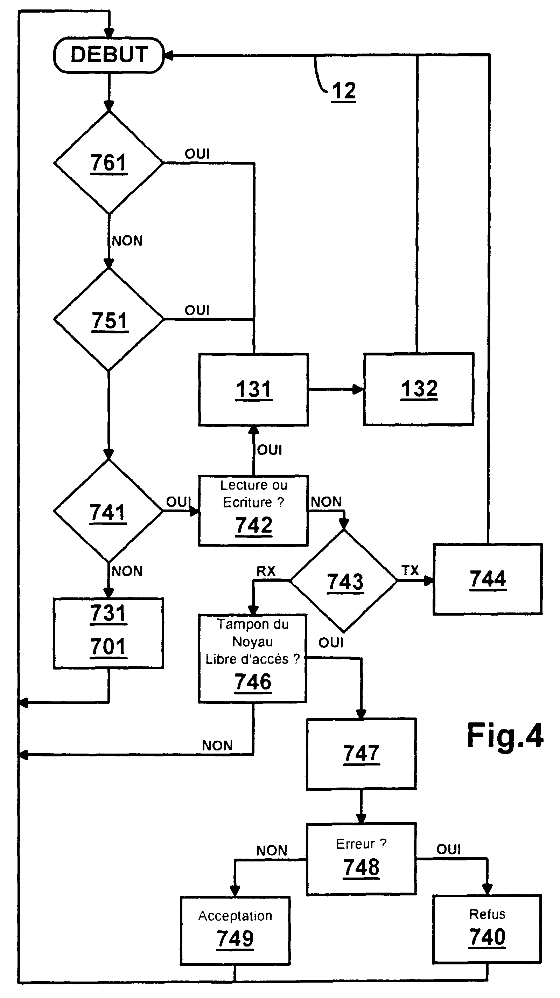

Le module superviseur de tâche va maintenant être décrit en liaison avec la figure 4. Ce module effectue dans l'ordre de priorité un premier test (761) pour déterminer si la tâche vidéo est active, dans le cas où la réponse est non il passe au tes suivant qui est un second test (751) pour déterminer si la tâche son est active enfin en cas de réponse négative un troisième test (741) détermine si la tâche communication est active. Dans l'affirmative après l'un des test il remplit à l'étape (131) la file de requête (13) d'accès mémoires et exécute à l'étape (132) cette requête de mémorisation dans la mémoire de masse en lecture ou en écriture puis reboucle sur le premier test. Lorsque le test sur l'activité d'une communication est affirmatif le superviseur (12) effectue un test pour déterminer s'il s'agit de lire ou d'écrire de l'information en mémoire. Si oui la requête est mise dans la file à l'étape (131). Dans le cas contraire le superviseur détermine à l'étape (743) s'il s'agit d'une transmission ou d'une réception et dans le cas d'une transmission envoie par l'étape (744) le bloc d'information au serveur central. Dans le cas d'une réception le superviseur vérifie que les tampons du noyau sont libres d'accès et dans l'affirmative envoie un message au serveur central pour accepter la réception d'un bloc de donnée à l'étape (747).Après la réception d'un bloc un contrôle d'erreur (748) est effectué du type de redondance cyclique CRC (cyclic redundant check) et le bloc est refusé à l'étape (740) en cas d'erreur ou accepté dans le cas contraire à l'étape (749) par l'envoi d'un message correspondant au serveur central signifiant que le bloc portant un numéro déterminé est refusé ou accepté puis reboucle sur les test de départ. dans le cas ou aucune tâche de niveau supérieur estactive le superviseur effectue à l'étape (731 ou 701) le traitement des tâches d'interface ou de gestion.

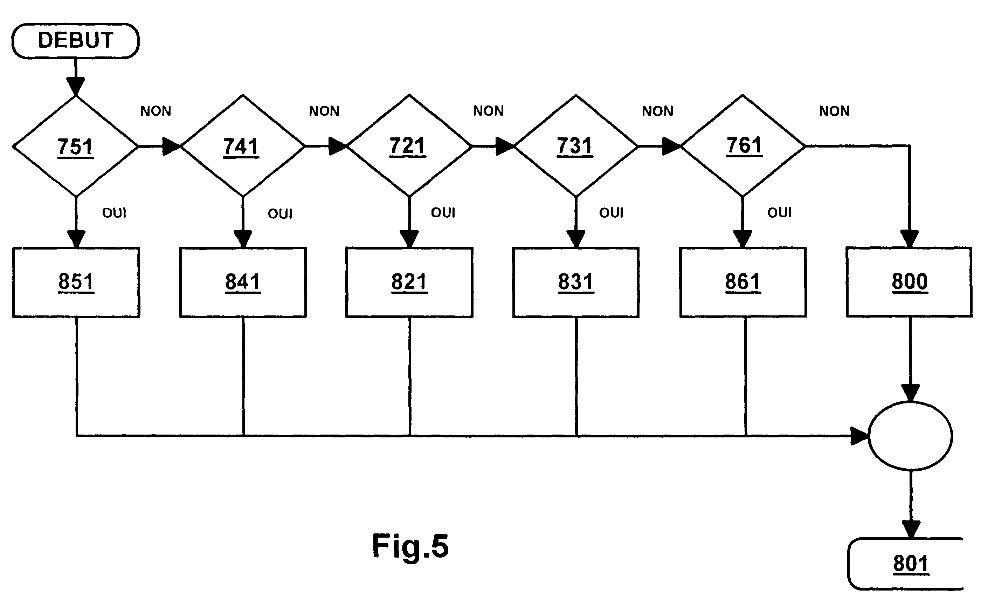

La détection d'une tâche active ou prête se fait comme représenté à la figure 5 par un test respectivement 721 à 761 sur chacun des tampons matériels ou logiciels respectifs (26) du disque dur, (36) d'interface, (46) de télécommunication, (56 et 57) du son, (66 et 67) de la vidéo qui sont associés avec chacun des circuits contrôleurs respectifs (2, 3, 4, 5, 6) de chacun des dispositifs matériels associés à l'unité centrale (1). Le test (721) permet de voir si les données sont présentes dans le tampon de mémoire d'entrée et sortie du disque, le test (731) permet de voir si des données sont présentes dans les tampons mémoires hardware ou software du dispositif d'interface client, le test (741) permet de voir si des données sont présentes dans les tampons en mémoire software ou hardware du dispositif télécommunication, le test (751) permet de déterminer si des données sont présentes dans le tampon en mémoire hardware ou software pour le sens, le test (761) permet de voir si des données sont présentes dans les tampons mémoires hardware ou software du dispositif vidéo. Si un ou plusieurs de ces tampons sont remplis de données le superviseur (12) positionne le ou les tampons de statut respectifs (821) pour le disque dur, (831) pour l'interface, (841) pour les télécommunications, (851) pour le son et (861) pour la vidéo correspondant au matériel à un état logique illustratif de l'activité. dans le cas contraire les tampons de statut du superviseur sont remis à l'étape (800) à une valeur illustrative de l'inactivité.

Du fait d'une part du mode de gestion des tâches en affectant la priorité la plus élevée à la tâche vidéo d'autre part de la présence de tampons matériel ou logiciel affecté à chacune des tâches pour mémoriser temporairement des données et de la présence des tampons de statut relatif à chaque tâche, il a été possible de faire gérer toutes ces tâches par une seule unité centrale avec un système d'exploitation multitâche qui offre les possibilité d'un affichage vidéo c'est à dire d'images animées par opposition à une représentation graphique dans laquelle les informations à traiter sont moins complexes. Cette utilisation de présentation vidéo peut également se faire sans pénaliser le traitement du son par le fait que le circuit (5) de contrôleur de son comporte des tampons de taille suffisante pour mémoriser une quantité de données compressées suffisante pour permettre pendant le traitement du son le transfert de données vidéo vers un des tampons (66, 67) de la vidéo en attendant le transfert suivant de données de son.

De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audiovisuelles sont numérisées et stockées dans les moyens de mémorisation, il est utilisé considérablement moins de place que pour un système de reproduction audiovisuelle traditionnel et par conséquent l'encombrement du système selon l'invention est nettement moindre.

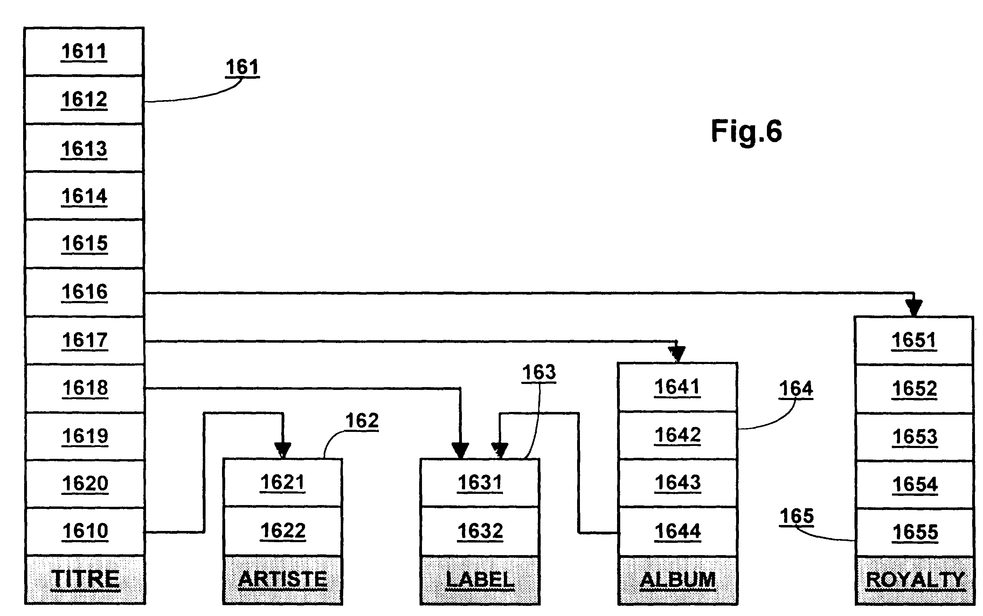

La base de donnée (16) est constituée, comme représentée à la figure 6, de plusieurs bases : une première (161) portant sur les titres des morceaux audiovisuel, une deuxième (162) sur les artistes, une troisième (163) sur les étiquettes, une quatrième (164) sur les albums, une cinquième (165) sur les royalties. La première base (161) comporte une première information (1611) donnant le titre du morceau, une deuxième information (1612) donnant l'identification du produit , cette identification étant unique. Une troisième information (1613) permet de connaître la catégorie à savoir jazz, classique, variété etc. Une quatrième information (1614) permet de connaître la date de la mise à jour. Une cinquième information (1615) permet de connaître la longueur en seconde nécessaire pour exécuter le morceau.

La sixième information (1616) est un lien avec la base des royalties. La septième information (1617) est un lien avec l'album. La huitième information(1618) est un lien avec les étiquettes. La neuvième information (1619) donne le coût d'acquisition pour le gérant du juke-box ;

La dixième information (1620) donne le coût des royalties pour chaque exécution du morceau;

La onzième information (1610) est un lien avec la base de donnée des artistes. Ce lien est constitué par l'identité de l'artiste. La base de donnée de l'artiste comporte outre l'identité de l'artiste, constitué par information (1621), une deuxième information (1622) constituée par le nom de l'artiste ou le nom du groupe. La base des étiquettes comporte une première information (1631) constituée par l'identité de l'étiquette établissant le lien avec la huitième information (1618) de la base de titre et une deuxième information (1632) constituée par le nom de l'étiquette. La base des informations d'album comporte une première information qui est l'identité de l'album (1641) qui constitue le lien avec la septième information (1617) de la base titre. Une deuxième information (1642) constitue le titre une troisième information (1643) est constituée par la date de mise à jour de l'album, et une quatrième information (1644) constituée par l'identité de l'étiquette. La base royalty est constituée d'une première information (1651) donnant l'identité de la royalty et correspond à la sixième information (1616) de la base titre. Une deuxième information (1652) constitue le nom de la personne recevant les royalties. Une troisième information (1653) est constituée par l'adresse d'expédition des royalties. Une quatrième information (1654) est constituée par le téléphone et une cinquième (1655) est constituée par le numéro de fax éventuel.

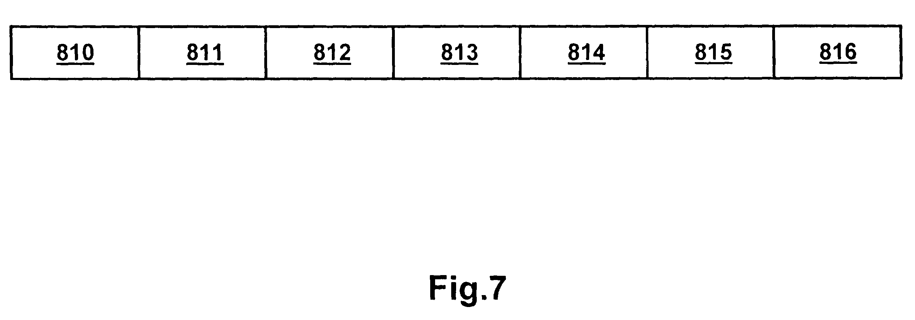

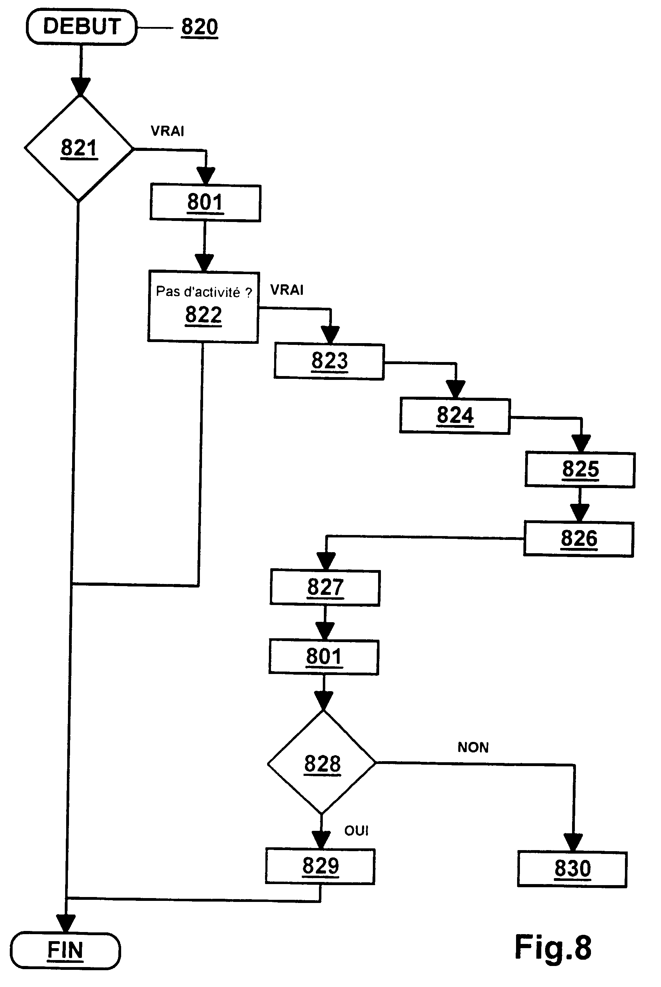

On comprend aisément que cette base de données (16) permet donc de tenir à jour les coûts pour le gérant, des achats de chansons et les royalties à payer à chacun des artistes ou groupes d'artistes dont les chansons ou les vidéos sont interprétées, ceci sous réserve qu'un protocole de communication permette de charger les chansons et de modifier le contenu de la base de donnée en fonction des chansons chargées et de communiquer au serveur central effectuant ces téléchargements les informations correspondantes. Ce protocole de communication est constitué d'une première étape au cours de laquelle le central demande une communication à l'unité à laquelle la communication est adressée. L'unité décode l'entête émise par le central et si elle se reconnaît, indique au central si elle est disponible ou non en fonction de l'état de son statut de système déterminé de la façon expliquée plus haut. Si elle n'est pas disponible le central émettra ultérieurement une nouvelle requête. Si elle est disponible le central commence à envoyer un premier bloc d'informations et successivement les blocs suivants. Chacun des blocs est constitué d'une pluralité de champs, comme représenté à la figure 7. Le premier champ (810) indique le numéro d'identification du vendeur, ce qui permet d'avoir des vendeurs multiples partageant un seul lien de communication avec le site central. Le deuxième champ (811) indique l'identité de l'application et permet de faire la distinction entre une chanson numérique, une vidéo animée numérique, une vidéo fixe ou une image graphique fixe numérique, une mise à jour de logiciel, l'émission de statistiques, une facturation, une mise à jour de la base de donnée, une transmission d'un sondage. Un troisième champ (812) permet d'identifier un sous type d'application tel que par exemple le numéro d'identité du produit, le type de facturation, l'indication d'une chanson au standard MIDI ou d'une chanson numérique, ou enfin l'indication qu'il s'agit d'un dernier bloc de transmission. Le champ suivant (813) permet de connaître le numéro de bloc attribué séquentiellement au bloc dans cette transmission. Le quatrième champ (814) permet de connaître la longueur en octet de chaque bloc de transmission. Un cinquième champ (815) permet de connaître les données de longueur variable de la transmission et un sixième champ (816) contient l'information de vérification cyclique redondante qui permet au juke-box en recalculant la valeur de cette information à partir des données reçues , de vérifier qu'il n'y a pas eu d'erreur dans la transmission. Les données sont codées avec le numéro d'identification de la station de réception c'est-à-dire avec le numéro de juke-box, ce qui permet d'éviter qu'une autre station reçoive cette information sans avoir à payer de royalties. Ceci étant un autre avantage de l'invention car dans les processus de l'art antérieur on ne sait pas exactement quelles stations ont reçu les messages et à la rigueur un fraudeur pourrait indiquer que les informations n'ont pas été correctement reçues pour ne pas avoir à payer de royalties. Ici cette opération n'est pas possible car le fraudeur n'a pas accès à son numéro d'identification connu uniquement de la machine et l'encryptage effectué en utilisation de ce numéro d'identification secret permet d'éviter la fraude et la réception par d'autres unités non habilitées à recevoir l'information. Enfin on peut comprendre que ce protocole, par les informations que contiennent les blocs, permet une grande flexibilité d'utilisation, notamment pour transmettre des images vidéo ou des chansons numérisées, ou encore pour permettre une mise à jour de logiciel comme explicité ci-après selon le processus de la figure 8. Dans le cas d'une mise à jour de logiciel, le système central envoie à l'étape (821) un premier signal de début permettant au juke-box auquel il est destiné de se reconnaître par son numéro d'identification et d'indiquer à ce juke-box le numéro de version de logiciel. A cette étape (821) le juke-box effectue d'abord une première vérification pour s'assurer que le numéro de version est supérieur au numéro des versions installées et lance ensuite le processus de vérification du statut du système indiqué par l'étape (801). Ce processus de vérification a déjà été décrit en relation avec la figure 7. Dans le cas où à l'étape (822) il n'y a aucune activité du système, le juke-box provoque à l'étape (823) l'affichage d'un message d'attente sur le dispositif d'affichage de façon à éviter qu'un utilisateur ne vienne interrompre la communication et, pendant ce temps-là, reçoit les données constituées par le nouveau logiciel à installer. A l'étape (824) l'unité effectue une sauvegarde de la version courante et à l'étape (825) l'unité modifie le fichier de démarrage pour démarrer avec la version de sauvegarde. Après avoir effectué cette modification l'unité applique, à l'étape (826), le logiciel reçu au logiciel du système et redémarre le logiciel du système à l'étape (827). Après avoir redémarré le système, l'unité effectue une nouvelle vérification de statut(801) et à l'étape (828) détermine si les statuts du système sont valides ou non. Dans le cas où il n'y a pas de détection d'erreurs, l'unité effectue à l'étape (829), la mise à jour des fichiers de démarrage avec la version nouvellement reçue et revient à un état d'attente. Dans le cas où il y a une erreur détectée, l'unité ré-initialise le système à l'étape (830) . Une fois l'installation effectuée, l'unité va attendre l'occurrence d'un événement représentatif d'une tâche, pour dérouler sa tâche comme on l'a vu précédemment.

Par la souplesse du système multitâche et par la flexibilité de son protocole de communication, chaque unité de juke-box peut ainsi être sélectionnée indépendamment des unités connectées au réseau et effectuer les mises à jour des base de données ou de version de chanson souhaitées ou encore de logiciel sans perturber le fonctionnement des autres unités du réseau et sans avoir à attendre spécifiquement que toutes les unités d'un réseau soient disponibles. Ceci est indépendant des modems utilisés qui peuvent être du type modem haute vitesse pour ligne téléphonique standard ou modem spécialisé sur ligne de donnée dédié ou encore modem SDN pour la transmission par fibre optique ou encore modem IRD pour connexion satellite.

Si un ou plusieurs paquets ne sont pas reçus correctement par le juke-box pendant la transmission, celui-ci n'interrompt pas la transmission car d'autres juke-boxes peuvent être aussi en communication. Toutefois lorsque la communication est arrêtée par le serveur central, chaque juke-box ayant eu un incident prend une ligne et signale au central les numéros des paquets non reçus. Ceci permet au central de les réémettre. Si l'enregistrement d'une ou plusieurs chansons ou vidéo ou encore d'une partie de chanson ou vidéo n'a pu être fait faute de place suffisante sur le disque ou les moyens de stockage, le système de chaque juke-box au gérant, signale par un affichage ou un message sonore le numéro du paquet s'il s'agit d'une partie de chanson ou vidéo, ou encore les numéros de chanson ou vidéo qui n'ont pu être enregistrés faute de place. Ceci permet au gérant après avoir décidé l'effacement de certaines chansons ou vidéo du disque dur de redemander au central l'envoi de ces chansons ou vidéo ou de la partie non reçue.

Lorsqu'il est question de tampons, il est rappelé que ceux-ci peuvent être présents soit physiquement sur le circuit auquel ils sont affectés soit réalisé par logiciel en réservant des emplacements de mémorisation dans la mémoire du système.

## Revendications

1. Procédé de communication entre un serveur central et un juke-box informatisé caractérisé en ce qu'il fonctionne dans un mode conférence et comporte les étapes suivantes :
- envoi d'un entête avant toute transaction qui inclura l'identité de la cible de destination, l'identité de l'émetteur, et la taille des paquets ;
- réponse du serveur envoyée sous forme de paquet de données chaque paquet envoyé par le serveur étant encrypté en utilisant le code d'identification du logiciel du juke-box ;
- réception d'un paquet de donnée par le juke-box qui décrypte le paquet, effectue en même temps un contrôle des données reçues par la méthode CRC et envoie un accusé de réception au serveur indiquant l'exactitude des informations reçues, pour lui permettre de préparer et envoyer un nouveau paquet à destination de l'unité.

2. Procédé de communication selon la revendication 1, caractérisé en ce que le serveur peut envoyer les informations par flot, le flot incluant plusieurs paquets et les unités réceptrices effectueront le décodage et le stockage ultérieurement et signaleront après la réception de l'indicateur du dernier paquet, les paquets défectueux reçus au serveur.

3. Procédé selon la revendication 2, caractérisé en ce que chaque paquet comporte un champ permettant l'identification du vendeur, un deuxième champ permettant d'indiquer l'identification d'une application, ce champ de 32 bits permettra de préciser s'il s'agit d'une chanson digitale, d'une vidéo digitale , de l'image fixe, d'une mise à jour de logiciel, de statistique, d'une facturation, ou d'une mise à jour de la base de donnée de l'unité, un troisième champ indiquant l'identification d'un seul type d'application tel que le numéro d'identification du produit, le type de facturation, la différence entre une chanson midi ou une chanson numérique, l'indication qu'il s'agit du dernier bloc, enfin un quatrième champ indiquant le numéro séquentiel du bloc dans la transmission, un cinquième champ indiquant la longueur en octet de ce bloc, un sixième champ situé par les données de longueur variable, un septième champ constitué par les données de vérification de la redondance cyclique.

4. Procédé selon une des revendications précédentes, caractérisé en ce que les unités de juke-box comportent un logiciel d'interprétation du deuxième champ des paquets de communication qui détectent le code correspondant à une mise à jour à distance du logiciel et après avoir vérifier le numéro de version du logiciel est plus grand que la version installée sur l'unité déclenche une procédure de vérification du statut du système pour assurer qu'il n'y a pas d'activité en cours sur le juke-box et dans l'affirmative l'unité provoque l'affichage d'un message d'attente, pendant la réception de la nouvelle version de logiciel sur l'écran effectue une copie de sauvegarde de la version de logiciel installé sur l'unité modifie le fichier de démarrage du système pour démarrer avec la version de sauvegarde puis lance l'exécution de la nouvelle version de logiciel vérifie après l'exécution de cette nouvelle version l'état du statut du système , si le statut du système est OK ré-initialise les fichiers de démarrage du système pour démarrer avec la nouvelle version dans le cas où le statut n'est pas OK ré-initialise les systèmes avec l'ancienne version et signale une erreur de réception au serveur central.

5. Procédé de communication selon une des revendications précédentes caractérisées en ce que chaque système de reproduction audiovisuelle comporte un système d'exploitation multitâches gérant à l'aide d'un micro processeur principal les tâches vidéo , les tâches son, la tâche télécommunication, et un tampon de statut est associé à chacune des tâches pour représenter l'activité ou la non activité de cette tâche.

## Patentansprüche

1. Verfahren zur Kommunikation zwischen einem zentralen Server und einer informatisierten Jukebox, dadurch gekennzeichnet, daß es in einem Konferenzbetrieb arbeitet und die folgenden Schritte enthält:
- Schicken eines Vorsatzes vor jeder Transaktion, der die Identität des Bestimmungsziels, die Identität des Senders und die Größe der Pakete enthält;
- Schicken einer Antwort des Servers in Form von Datenpaketen, wobei jedes vom Server geschickte Paket verschlüsselt wird, indem der Identifizierungscode der Software der Jukebox verwendet wird;
- Empfangen eines Datenpakets durch die Jukebox, die das Paket entschlüsselt, gleichzeitig eine Steuerung der empfangenen Daten durch das CRC-Verfahren ausführt und eine Empfangsbestätigung an den Server schickt, die die Richtigkeit der empfangenen Informationen angibt, um diesem zu ermöglichen, ein neues Paket vorzubereiten und zur Einheit zu schicken.

2. Kommunikationsverfahren nach Anspruch 1, dadurch gekennzeichnet, daß der Server die Informationen in einem Strom schicken kann, wobei der Strom mehrere Pakete enthält und die empfangenden Einheiten die spätere Decodierung und Speicherung ausführen und nach dem Empfang des Zeigers für das letzte Paket dem Server die empfangenen fehlerhaften Pakete melden.

3. Verfahren nach Anspruch 2, dadurch gekennzeichnet, daß jedes Paket ein Feld, das die Identifizierung des Lieferanten ermöglicht, ein zweites Feld, das die Angabe der Identifizierung einer Anwendung ermöglicht, wobei dieses Feld aus 32 Bit die Präzisierung ermöglicht, ob es sich um ein digitales Lied, ein digitales Video, ein festes Bild, eine Software- oder Statistik-Aktualisierung, eine Rechnungsstellung oder eine Aktualisierung der Datenbank der Einheit handelt, ein drittes Feld, das die Identifizierung eines einzelnen Exemplars der Anwendung wie etwa der Identifizierungsnummer des Produkts, des Rechnungstyps, des Unterschieds zwischen einem Midi-Lied oder einem digitalen Lied oder der Angabe, ob es sich um den letzten Block handelt, angibt, und schließlich ein viertes Feld enthält, das die laufende Nummer des Blocks in der Übertragung angibt, wobei ein fünftes Feld die Länge dieses Blocks in Bytes angibt, ein sechstes Feld durch die Daten mit variabler Länge festgelegt ist und ein siebtes Feld durch die Daten zur Verifikation der zyklischen Redundanz gebildet ist.

4. Verfahren nach einem der vorangehenden Ansprüche, dadurch gekennzeichnet, daß die Jukebox-Einheiten eine Software zur Interpretation des zweiten Feldes von Kommunikationspaketen enthalten, die den Code erfaßt, der einer Fern-Aktualisierung der Software entspricht, und nach der Verifikation, daß die Versionsnummer der Software höher als die in der Einheit installierte Version ist, eine Prozedur zur Verifikation des Status des Systems beginnt, um sicherzustellen, daß in der Jukebox momentan keine Aktivität stattfindet, wobei im positiven Fall die Einheit die Anzeige einer Wartenachricht hervorruft, während des Empfangs der neuen Software-Version auf dem Bildschirm eine Sicherungskopie der in der Einheit installierten Software-Version ausführt, die Neustart-Datei des Systems modifiziert, um mit der Sicherungsversion zu starten, und dann die Ausführung der neuen Software-Version auslöst, nach der Ausführung dieser neuen Version den Zustand des Systemstatus verifiziert, falls der Systemstatus in Ordnung ist, die Neustart-Dateien des Systems neu initialisiert, um mit der neuen Version zu starten, und dann, wenn der Status nicht in Ordnung ist, die Systeme mit der früheren Version neu initialisiert und dem zentralen Server einen Empfangsfehler meldet.

5. Kommunikationsverfahren nach einem der vorangehenden Ansprüche, dadurch gekennzeichnet, daß jedes audiovisuelle Wiedergabesystem ein Multitasking-Betriebssystem enthält, das mit Hilfe eines Haupt-Mikroprozessors die Video-Tasks, die Klang-Tasks und die Telekommunikations-Task steuert, wobei jeder der Tasks ein Statuspuffer zugeordnet ist, der die Aktivität oder die Nichtaktivität dieser Task angibt.

## Claims

1. Method for communication between a central server and a computerised juke-box characterised in that it operates in conference mode and comprises the following steps:
- sending a header before any transaction, to include the identity of the destination target, the identity of the emitter, and the size of the packets;
- response from the server sent in the form of a data packet each packet sent by the server being encoded by using the identification code of the juke-box software;
- reception of a data packet by the juke-box, which decodes the packet, simultaneously performs a check on the data received by the CRC method and sends an acknowledgment of receipt to the server indicating the accuracy of the information received, to allow it to prepare and send another packet to the unit.

2. Communication method according to Claim 1, characterised in that the server can send the information in a stream, the stream including several packets and the receiving units will perform the decoding and storage subsequently and, on reception of the indicator of the last packet, will notify the server of defective packets received.

3. Method according to Claim 2, characterised in that each packet comprises a field permitting the identification of the vendor, a second field making it possible to indicate the identification of an application, this 32-bit field will make it possible to specify whether it involves a digital song, a digital video, a fixed image, an update of software, statistics, an invoice, or an update of the data base of the unit, a third field indicating the identification of a single type of application such as the product identification number, the invoice type, the difference between a midi song and a digital song, the indication that this is the last block, and finally a fourth field indicating the sequential block number in the transmission, a fifth field indicating the length of this block in bytes, a sixth field located by the variable-length data, a seventh field constituted by the cyclic redundancy check data.

4. Method according to one of the preceding claims, characterised in that the juke-box units comprise a piece of software for interpreting the second field of communication packets that detect the code corresponding to a remote update of the software and, after having checked the software version number is greater than the version installed on the unit, triggers a procedure for checking the status of the system to ensure that there is no activity in progress on the juke-box and, if so, the unit causes a wait message to be displayed, during the reception of the new version of software on the screen performs a back-up copy of the version of software installed on the unit, modifies the start-up file of the system so as to start up with the back-up version then launches the execution of the new version of software, checks after the execution of this new version the condition of the system status, if the system status is OK resets the start-up files of the system so as to start up with the new version, where the status is not OK resets the systems with the old version and reports a reception error to the central server.

5. Communication method according to one of the preceding claims characterised in that each audiovisual reproduction system comprises a multitasking exploitation system managing, with the aid of a main microprocessor, the video tasks, the sound tasks, the telecommunications task, and a status buffer is associated with each of the tasks to represent the activity or inactivity of this task.
